# EUROPÄISCHE PATENTSCHRIFT

(11) **EP 0 785 364 B1**
(45) Veröffentlichungstag und Bekanntmachung des Hinweises auf die Patenterteilung: **20.10.1999**
(21) Anmeldenummer: 96117253.3
(22) Anmeldetag: 28.10.1996
(51) Int. Cl.: F16B 13/08

(54) **Befestigungselement**
Fastening element
Elément de fixation

(30) Priorität: 20.01.1996 DE 19601990
(43) Veröffentlichungstag der Anmeldung: 23.07.1997
(73) Patentinhaber: fischerwerke Artur Fischer GmbH & Co. KG, 72178 Waldachtal (DE)
(72) Erfinder: Fischer, Artur, Prof. Dr. h.c. Dr.-Ing. E.h, 72178 Waldachtal (DE)

(56) Entgegenhaltungen:
- EP-A- 0 685 656
- DE-A- 4 433 918
- FR-A- 2 552 502

## Beschreibung

Die Erfindung betrifft ein Befestigungselement, das zum Eintreiben in ein Bohrloch eines Bauteils und zum Verspannen eines Gegenstandes mit dem Bauteil vorgesehen ist, gemäß dem Oberbegriff des Anspruchs 1.

Ein derartiges Befestigungselement ist beispielsweise in der DE 195 36 786.3 beschrieben. Das beschriebene Befestigungselement weist einen Schaft auf, der an seinem hinteren, aus dem Bohrloch herausstehenden Ende mit einem Gewinde als Haltemittel zum Verspannen des Gegenstandes mit dem Bauteil versehen ist. Zum Verankern des Befestigungselements im Bohrloch weist der Schaft eine schräg in Richtung seines vorderen Stirnendes hin ansteigende Gleitfläche auf, die beispielsweise durch eine Ausnehmung im oder eine Einprägung in den Schaft gebildet ist. Auf der Gleitfläche liegt ein Keil auf, der sich beim Eintreiben des Befestigungselements in das Bohrloch gegen einen Anschlag am Schaft abstützt.

Zum Verankern des Befestigungselements im Bohrloch wird eine Mutter auf das Gewinde des Schafts aufgeschraubt und auf diese Weise ein zuvor aufgesteckter Gegenstand mit dem Bauteil verspannt. Durch das Verspannen wird der Schaft ein kurzes Stück in Richtung aus dem Bohrloch herausgezogen. Der Keil greift an einer Bohrlochwandung an und bewegt sich nicht mit dem Schaft mit, sondern gleitet an dessen schräger Gleitfläche auf, wodurch das Befestigungselement im Bohrloch verankert ist.

Bis zum Eintreiben in das Bohrloch wird der Keil mittels eines Gummirings auf der Gleitfläche des Schafts gehalten.

Der Erfindung liegt die Aufgabe zugrunde, den Keil eines Befestigungselements der eingangs genannten Art bis zum Eintreiben in ein Bohrloch unverlierbar auf der Gleitfläche des Schafts anzubringen.

Diese Aufgabe wird erfindungsgemäß durch die Merkmale des Anspruchs 1 gelöst. Durch das Verkleben ist der Keil bis zum Eintreiben des Befestigungselements in das Bohrloch unverlierbar mit dem Schaft verbunden. Er kann nicht versehentlich beispielsweise beim Verpacken, bei der Entnahme aus der Verpackung oder der Handhabung des Befestigungselements auf einer Baustelle vom Schaft gelöst werden. Beim Eintreiben des Befestigungselements in das Bohrloch gelangt der in radialer Richtung über den Umfang des Schafts vorstehende Keil in Eingriff mit der Bohrlochwandung und wird von dieser zurückgehalten. Dadurch wird der Klebstoff getrennt und der Keil gleitet auf der Gleitfläche des Schafts zurück bis er gegen dessen Anschlag stößt, von dem er mit Abstand auf der Gleitfläche angeklebt war. Durch die Anlage am Anschlag des Schafts wird der Keil zusammen mit dem Befestigungselement in das Bohrloch eingetrieben. Durch das Trennen des Klebstoffs beim Eintreiben des erfindungsgemäßen Befestigungselements in das Bohrloch wird der Keil frei auf der Gleitfläche verschiebbar. Die Verankerung des Befestigungselements erfolgt in ansich bekannter Weise wie eingangs beschrieben. Das Ankleben des Keils auf der Gleitfläche des Schafts hat den Vorteil, daß eine vorangegangene Benutzung des Befestigungselements, die zu einer Beschädigung des Befestigungselements geführt haben könnte, dadurch offensichtlich ist, daß der Keil vom Schaft gelöst ist.

Bei einer bevorzugten Ausführungsform der Erfindung ist die Gleitfläche durch Prägen gefertigt. Dadurch wird der Werkstoff des Schafts im Bereich der Gleitfläche verfestigt und seine Neigung zum Kaltverschweißen oder Fressen beim Verschieben des Keils auf der Gleitfläche vermindert und sein Gleitverhalten verbessert.

Durch Ausbildung zweier Gleitflächen in einem stumpfen Winkel von beispielsweise etwa 100° - 120° zueinander erhält der Keil eine Führung in Längsrichtung des Schafts. Außerdem wird die Anlagefläche vergrößert und die Flächenpressung dadurch verringert, wodurch die Freßneigung weiter abnimmt.

Indem der Keil mit dachförmigen, in einer Linie hintereinander stehenden Zähnen versehen wird, reibt der Keil beim Eintreiben des erfindungsgemäßen Befestigungselements in ein Bohrloch nur eine Riefe in Bohrlochwand. Dadurch verringert sich die zum Eintreiben erforderliche Kraft. Mit dachförmig ist gemeint, daß Seitenflächen der Zähne im Winkel aufeinander zu verlaufen und Zahnköpfe schmal oder spitz sind. Weiterer Vorteil dachförmig ausgebildeter Zähne ist, daß sich deren schmale oder spitze Köpfe beim Verankern des Befestigungselements im Bohrloch, wobei der Keil auf der Gleitfläche aufgleitet, gut in die Bohrlochwandung eingraben und eine feste Verankerung des Befestigungselements im Bohrloch bewirken.

Bevorzugt wird eine in Eintreibrichtung des Befestigungselements vordere Zahnflanke der Zähne des Keils kürzer als eine hintere Zahnflanke ausgebildet, wodurch eine gute Sperrwirkung der Zähne bei geringem Eintreibwiderstand erzielt wird.

Bei einer Ausgestaltung der Erfindung weist der Keil eine Einführnase an seinem vorderen Ende auf. Solange der Keil in seiner vorgeschobenen Position auf der Gleitfläche des Schafts angeklebt ist, befindet sich die Einführnase so dicht am Schaft, daß Sie beim Einführen in ein Bohrloch in dessen Mündung hineingelangt, bevor der Keil von der Bohrlochwandung zurückgehalten und der Klebstoff dadurch getrennt wird. Es wird vermieden, daß der Keil an der Mündung des Bohrlochs anstößt und dadurch vom Schaft getrennt wird, bevor er soweit in das Bohrloch hineinragt, daß ihn die Bohrlochwandung auf der Gleitfläche des Schafts hält. Auf diese Weise wird sichergestellt, daß der Keil wie vorgesehen zusammen mit dem Schaft in das Bohrloch eingetrieben wird.

Vorzugsweise ist der Keil und/oder der Schaft des erfindungsgemäßen Befestigungselements aus Temperguß hergestellt, der aufgrund seines Graphitgehalts sehr gute Gleiteigenschaften bietet.

Die Erfindung wird nachfolgend anhand eines in der Zeichnung dargestellten Ausführungsbeispiels näher erläutert.

Es zeigen:
- Figur 1: ein erfindungsgemäßes Befestigungselement; und
- Figur 2: einen Schnitt durch das Befestigungselement aus Figur 1 entlang Linie II-II.

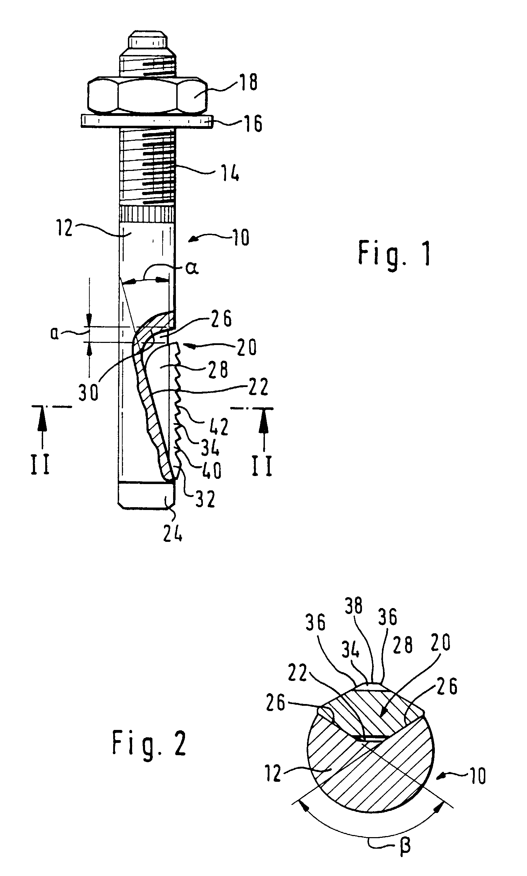

Das in der Zeichnung dargestellte, erfindungsgemäße Befestigungselement 10 weist einen zylindrischen Schaft 12 auf. Ein hinteres Ende des Schaftes 12 ist mit einem Gewinde 14 versehen, auf das eine Unterlegscheibe 16 aufgeschoben und eine Mutter 18 aufgeschraubt ist (Unterlegscheibe 16 und Mutter 18 sind in Figur 2 nicht dargestellt).

In seinem vorderen Bereich weist der Schaft 12 eine Längsnut 20 auf, deren Nutgrund 22 zu einem vorderen Stirnende 24 des Schafts 12 unter einem spitzen Steigwinkel a zur Längsrichtung des Schafts 12 von etwa 11° - 13° ansteigt. Nutwangenflächen 26 der Längsnut 20 stehen in einem stumpfen Winkel β von etwa 100° - 120° zueinander. Sie bilden zum vorderen Stirnende 24 des Schafts 12 hin ansteigende Gleitflächen 26 für einen in der Längsnut 20 einliegenden Keil 28.

An ihrem hinteren Ende schließt die Längsnut 20 mit einer einen Anschlag 30 für den Keil 28 bildenden Stirnfläche ab.

Um den Keil 28 bei der Handhabung des erfindungsgemäßen Befestigungselements 10 bis zum Eintreiben in ein nicht dargestelltes Bohrloch unverlierbar mit dem Schaft 12 zu verbinden, ist er auf den Gleitflächen 26 angeklebt. Das Ankleben kann an einer oder mehreren diskreten Stellen der Gleitflächen 26, über größere Flächenteile der Gleitflächen 26 oder auch auf der gesamten Kontaktfläche des Keils 28 mit den Gleitflächen 26 erfolgen. Der Keil 28 ist mit einem Abstand a vom Anschlag 30 in einer vorgeschobenen Position am Schaft 12 angeklebt. In seiner angeklebten, vorgeschobenen Position steht der Keil 28 in radialer Richtung über einen Umfang des Schafts 12 vor (Figur 2). Beim Eintreiben des erfindungsgemäßen Befestigungselements 10 in das Bohrloch gelangt der Keil 28 in Eingriff mit einer Bohrlochwandung und wird von dieser zurückgehalten, wodurch der Klebstoff getrennt wird und der Keil 28 frei auf den Gleitflächen 26 gleiten kann. Er gelangt in Anlage an den Anschlag 30 und wird zusammen mit dem Schaft 12 in das Bohrloch eingetrieben. Durch Anziehen der Mutter 18 wird der Schaft 12 ein kurzes Stück in Richtung aus dem Bohrloch herausbewegt, wogegen der in Eingriff mit der Bohrlochwandung stehende Keil 28 in axialer Richtung unbeweglich im Bohrloch verbleibt und dadurch an den Gleitflächen 20 aufgleitet und das erfindungsgemäße Befestigungselement 10 im Bohrloch verankert.

An seinem vorderen Ende läuft der Keil 28 in eine Einführnase 32 aus, die sich in der vorgeschobenen Position des angeklebten Keils 28, wie sie in der Zeichnung dargestellt ist, so dicht am Umfang des Schafts 12 befindet, daß sie in das Bohrloch hineinragt, bevor der Keil 28 durch Trennen des Klebstoffs vom Schaft 12 gelöst wird. Auf diese Weise hält die Bohrlochwandung an der Mündung des Bohrlochs den Keil 28 an dessen Einführnase 32 in der Längsnut 20 des Schafts 12, wenn der Klebstoff getrennt wird. Ein vorzeitiges Lösen des Keils 28 wird dadurch verhindert. Es ist sichergestellt, daß der Keil 28 wie vorgesehen zusammen mit dem Schaft 12 in das Bohrloch eingetrieben wird.

Der Keil 28 weist eine in Längsrichtung verlaufende Reihe von in einer Linie hintereinander angeordneten Zähnen 34 auf, die in radialer Richtung abstehen. Die Zähne 34 sind dachförmig ausgebildet, d. h. ihre Seitenfläche 36 laufen schräg aufeinander zu, so daß Zahnköpfe 38 der Zähne 34 schmal sind. Vordere Zahnflanken 40 der Zähne 34 sind kürzer und damit steiler ausgebildet als hintere Zahnflanken 42.

## Patentansprüche

1. Befestigungselement (10) mit einem Schaft (12), mit einem Haltemittel zur Verspannung eines Gegenstandes an einem Bauteil an seinem hinteren Ende, mit einer schräg zu seinem vorderen Stirnende hin ansteigenden Gleitfläche (26) und mit einem Anschlag 30, gegen den sich ein auf der Gleitfläche (26) aufliegender Keil (28) beim Eintreiben des Befestigungselements (10) in ein Bohrloch abstützt, **dadurch gekennzeichnet,** daß der Keil (28) in einer vorgeschobenen Position mit Abstand (a) zum Anschlag (30) auf der Gleitfläche (26) angeklebt ist, in der er in radialer Richtung über einen Umfang des Schafts des Befestigungselements (10) vorsteht.

2. Befestigungselement nach Anspruch 1, **dadurch gekennzeichnet,** daß die Gleitfläche (26) durch eine Prägung gebildet ist.

3. Befestigungselement nach Anspruch 1, **dadurch gekennzeichnet,** daß es zwei in einem stumpfen Winkel β zueinander angeordnete Gleitflächen (26) aufweist.

4. Befestigungselement nach Anspruch 1, **dadurch gekennzeichnet,** daß der Keil (28) dachförmige Zähne (34) an seiner einer Bohrlochwandung zugewandten Seite aufweist.

5. Befestigungselement nach Anspruch 1, **dadurch gekennzeichnet,** daß der Keil (28) Zähne (34) aufweist, deren vordere Zahnflanken (40) kürzer als ihre hinteren Zahnflanken (42) sind.

6. Befestigungselement nach Anspruch 1, **dadurch gekennzeichnet**, daß der Keil (28) eine Einführnase (32) an seinem vorderen Ende aufweist, die in der vorgeschobenen Position, in der der Keil (28) angeklebt ist, nicht oder nur wenig in radialer Richtung über den Umfang des Befestigungselements (10) vorsteht.

7. Befestigungselement nach Anspruch 1, **dadurch gekennzeichnet**, daß der Keil (28) und/oder der Schaft (12) aus Temperguß hergestellt ist.

## Claims

1. Fastening element (10) having a shank (12), a fixing means at its rear end for clamping an article against a building component, a slide face (26) that rises obliquely to its leading end and a stop (30), against which a wedge (28), resting on the slide face (26), bears as the fastening element (10) is driven into a drilled hole, characterized in that the wedge (28) is adhesively attached to the slide face (26) in a pushed-forward position at a distance (a) from the stop (30), in which position it projects radially beyond a circumference of the shank of the fastening element (10).

2. Fastening element according to claim 1, characterized in that the slide face (26) is formed by a stamped portion.

3. Fastening element according to claim 1, characterized in that it has two slide faces (26) that are arranged at an obtuse angle β relative to one another.

4. Fastening element according to claim 1, characterized in that the wedge (28) has roof-shaped teeth (34) on its side that faces a wall of a drilled hole.

5. Fastening element according to claim 1, characterized in that the wedge (28) has teeth (34), the front flanks (40) of which are shorter than the rear flanks (42) thereof.

6. Fastening element according to claim 1, characterized in that the wedge (28) has an insertion nose (32) at its front end, which nose, in the pushed-forward position in which the wedge (28) is adhesively attached, does not project or projects only a little way radially beyond the circumference of the fastening element (10).

7. Fastening element according to claim 1, characterized in that the wedge (28) and/or the shank (12) is/are manufactured from malleable cast iron.

## Revendications

1. Elément de fixation (10) comportant un fût (12) présentant, à son extrémité arrière, un moyen de blocage pour fixer un objet sur un composant, ainsi qu'une surface glissante (26) qui va en montant obliquement en direction de son extrémité frontale avant et ainsi qu'une butée (30) contre laquelle, lors de l'introduction de l'élément de fixation (10) dans un trou percé, s'appuie un coin (28) placé sur la surface glissante (26), caractérisé par le fait que le coin (28) est collé sur la surface glissante (26), à une certaine distance (a) de la butée (30), en une position avancée dans laquelle il déborde en direction radiale au-dessus d'une périphérie du fût de l'élément de fixation (10).

2. Elément de fixation selon la revendication 1, caractérisé par le fait que la surface glissante (26) est formée par estampage.

3. Elément de fixation selon la revendication 1, caractérisé par le fait qu'il présente deux surfaces glissantes (26) disposées en formant entre elles un angle obtus β.

4. Elément de fixation selon la revendication 1, caractérisé par le fait que le coin (28) présente des dents en forme de toit (34) sur sa face orientée vers une paroi du trou percé.

5. Elément de fixation selon la revendication 1, caractérisé par le fait que le coin (28) présente des dents (34) dont les flancs avant (40) sont plus courts que leurs flancs arrière (42).

6. Elément de fixation selon la revendication 1, caractérisé par le fait que le coin (28) présente à son extrémité avant un talon d'abordage (32) qui, en position avancée, dans laquelle le coin (28) est collé, ne déborde pas, ou que de peu, en direction radiale, au-dessus de la périphérie de l'élément de fixation (10).

7. Elément de fixation selon la revendication 1, caractérisé par le fait que le coin (28) et/ou le fût (12) est fabriqué en fonte malléable.
